# EUROPEAN PATENT APPLICATION

(11) **EP 4 260 708 A1**
(43) Date of publication of application: **18.10.2023**
(21) Application number: 22168069.7
(22) Date of filing: 13.04.2022
(51) Int. Cl.: A23C 20/02

(54) **SURFACE-RIPENED VEGAN FOOD PRODUCT AND METHOD OF MAKING THEREOF**

(71) Applicant: Eidgenössisches Departement für Wirtschaft, Bildung und Forschung (WBF) Agroscope, 3003 Bern (CH)
(72) Inventor: Stoffers, Helena, 3510 Konolfingen (CH); Bachmann, Hans-Peter, 3658 Merligen (CH); Schmidt, Remo, 3012 Bern (CH)
(74) Representative: E. Blum & Co. AG

(57) **Abstract**

The present invention relates to a surface-ripened vegan food product and a method for producing a surface-ripened vegan food product. The present invention further relates to the use of a sheet-like porous material in the manufacture of a surface-ripened vegan food product.

## Description

### Technical Field

The present invention relates to a surface-ripened vegan food product and a method for producing a surface-ripened vegan food product. The present invention further relates to the use of a sheet-like porous material in the manufacture of a surface-ripened vegan food product. The invention further relates to corresponding vegetarian hybrid food products and meat hybrid food products and their manufacturing.

### Background Art

A variety of vegan food products are known in the art. However, whereas methods of surface-ripening are well known for non-vegan food products such as cheese or meat, e.g. smear-ripened cheese, surface ripening of vegan food products has been very limited until now.

During surface ripening, food products, such as cheese, generally ripen from their outside surface inward to the interior paste. Ripening occurs through the metabolism of microorganisms such as bacteria, yeasts, and/or moulds that are present on the surface of a precursor food product.

For example, surface-ripening of vegan food products using a white mould culture has previously been achieved. In white mould ripening, the white mould forms a rind on the surface of the vegan food product and thereby aids in shaping of the product. For white mould ripening, it is sufficient to regularly invert the food product during ripening. However, due to the relatively soft surface texture of many vegan foods when compared to traditional, non-vegan foods, mechanically more demanding types of surface-ripening still represent a challenge for vegan food products. The relatively soft surface texture of many vegan food products is due to differences in the manufacturing process that are required for vegan food products compared to traditional, non-vegan food products. An example of such a mechanically demanding surface-ripening process is smear-ripening.

Smear-ripening is a well-known method in the field of traditional cheese ripening. Traditional smear-ripened cheeses are characterized by a complex microflora, which develops on the surface during ripening. The development of the microflora contributes to a red-orange or brownish pigmented surface, which is characteristic for traditional smear-ripened cheese varieties.

In a conventional process for smear-ripening of cheese, a freshly brined cheese wheel is frequently brushed (smeared) with a smear liquid. Usually the cheese is brushed 3-5 times per week until growth of the microorganisms within the smear layer has started. Then, the frequency of brushing can be reduced stepwise to 1-2 times per week until the ripening process is complete. Frequent brushing is typically required in order to prevent growth of undesired moulds.

Such a process for smear-ripening is either labour-intensive in case of manual brushing or capital-intensive in case brushing is performed by robots. Moreover, frequent brushing usually leads to an at least partial destruction of the primary structure of the cheese, which results from the press mould.

However, vegan food products have only a thin rind or no rind at all and are therefore more susceptible to destruction of the surface during mechanically demanding surface-ripening processes such as smear-ripening. Hence, in case of vegan food products, the destruction or partial destruction of the surface due to brushing is even more pronounced.

Suitable ripening media for surface ripening of traditional food products such as cheese are known in the art and may also be used for surface ripening of vegan food products, such as cheese analogues or meat analogues.

For example, a smear liquid used for smear-ripening of cheese typically contains salty water or a whey liquid solution and may or may not contain commercially available microorganisms, e.g. mixed cultures, so called surface starters.

Usually, the salty water contains 2-10% (w/w) sodium chloride.

Examples of surface starter organisms are *Debaryomyces hansenii*, *Geotrichum candidum, Brevibacterium linens, Brevibacterium casei*, *Staphylococcus equorum, Micro-bacterium gubbeenense*, *Arthrobacter* spp., *Corynebacterium casei* and mixtures thereof.

Ripening occurs in a climate-controlled environment at a temperature of 8°C to 20°C and a high relative humidity.

Usually the relative humidity is at least 90% RH.

Irrespective of whether or not such microorganisms are present in the smear liquid, the resulting smear in general contains a mixture of microorganisms. Such microorganisms in general are (1) yeasts, (2) Gram-positive bacteria, (3) Gram-negative bacteria, (4) moulds and mixtures thereof.

Usually, in smear liquids one or more of the following microorganisms are found:
- yeasts such as *Debaryomyces hansenii*, *Kluyveromyces marxianus*, *Kluyveromyces lactis*, *Geotrichum candidum* and mixtures thereof;
- Gram-positive bacteria such as coryneform bacteria, *Micrococcaceae* and mixtures thereof, wherein
   examples of coryneform bacteria are *Brevibacterium linens*, *Brevibacterium aurantiacum* and *Arthrobacter sp.* and mixtures thereof; and
   examples of *Micrococcaceae* are *Micrococcus sp*., non-pathogenic *Staphylococcus sp.* and mixtures thereof,
- Gram-negative bacteria such as *Enterobacteriaceae*, *Halomonadaceae*, *Alcaligenaceae, Caulobacteraceae, Moraxellaceae*, *Oceanospirillaceae, Pseudoalteromonadaceae, Pseudomonadaceae, Vibrionaceae, Xanthomonadaceae*, in particular *Enterobacteriaceae*, and mixtures thereof; and
- Moulds such as *Fusarium domesticum.*

Selected moulds such as *Bisifusarium domesticum* can have a positive effect on the smear by reducing stickiness. Many moulds, however, lead to undesirable discolouration or can even form mycotoxins.

Additional microorganisms may be present in the smear liquid. Their use for commercial starter cultures is possible after stringent evaluation of their safety for use in food products, e.g. by full genome sequencing followed by sequence analysis.
The composition of the smear typically changes during ripening.

For example, the properties of smear from the surface of a Roquefort-type cheese have been described by Hostin et al. [Hostin S and Palo V, 1992, Milchwirtsch. Ber. Bundesanst. Wolfpassing Rotholz No. 111: 106-109, Eigenschaften der Schmiere der Käseoberfläche der Roquefortart, International food information service, database accession no. FS-1993-01-P-0075].

Moreover, it is typically desired to pack vegan food products in a packaging material for post-ripening storage, distribution and/or sales. Such packaging material is typically air-tight. It is known from traditional smear-ripened cheese (dairy product; non-vegan), that during storage in such a packaging material, the metabolism and/or composition of the microflora changes. During storage in a packaging material, in particular air-tight packaging material, the smear surface may become sticky and an off-odour may develop. Such a sticky surface and/or off-odourous surface is also referred to as a defective or faulty smear. The off-odour that may escape the packaging material upon opening is also referred to as off-flavouring.

The group of substances that contribute to the off-flavour comprises ammonia and low molecular weight sulphur compounds such as methanethiol (CH₃SH), hydrogen sulphide (H₂S), dimethyl sulphide (DMS), dimethyl disulphide (DMDS), dimethyl trisulphide (DMTS) and carbonyl sulphide (herein collectively referred to as "off-flavour compounds"). Moreover, sulphur compounds may interact with each other and with other compounds in the food product, generating other volatile off-flavour compounds.

### Disclosure of the Invention

Hence, it is a general object of the invention to provide a surface-ripened vegan food product such as a cheese analogue or a meat analogue and a method for making thereof. In particular, the invention relates to a surface-ripened cheese analogue or meat analogue, such as a smear-ripened cheese analogue or meat analogue, and a manufacturing method thereof. In addition, the invention relates to the use of a sheet-like porous material in a method for manufacturing a surface-ripened vegan food product such as a cheese analogue or a meat analogue.

Unless otherwise stated, the following **definitions** shall apply in this specification:
As used herein, the term "a", "an", "the" and similar terms used in the context of the present invention (especially in the context of the claims) are to be construed to cover both the singular and plural unless otherwise indicated herein or clearly contradicted by the context.

As used herein, the terms "including", "containing" and "comprising" are used herein in their open, non-limiting sense. It is understood that the various embodiments, preferences and ranges may be combined at will.

The term "fabric" is known in the field and particularly relates to textile materials made from fibres. The term "fabric" also encompasses the terms "textile fabric", "textile sheet material", "fibre aggregate", "textile surface", "textile structure", "textile surface structure".

The term "woven fabric" is known in the field and relates to a fabric formed by weaving. Woven fabrics are often created on a loom, and made of many threads woven on a warp and a weft. A woven fabric is made by interlacing two or more threads at right angles to one another.

The term "knitted fabric" is known in the field and relates to a fabric made (i.e. knitted) of thread systems by forming stitches on a knitting machine. Knitted fabrics are commonly used, for example, to make underwear or bedclothes.

The term "non-woven fabric" is known in the field and relates to sheet or web structures bonded together by entangling fiber or filaments (and by perforating films) mechanically, thermally or chemically. The term is used to denote fabrics that are neither knitted nor woven.

As used herein, the term "biodegradable" or "biodegradability" relates to the "cradle to cradle" (C2C) standard. C2C certified compostability requirements are specified for example in EN 13432 (alternatively ISO 17088, ISO 18606 or ASTM D6400). However, to meet C2C certified compostability requirements, the fabric must be appropriate for home composting, and must not be limited to industrial composting facilities.

Now, in order to implement these and still further objects of the invention, which will become more readily apparent as the description proceeds, a surface-ripened vegan food product and a manufacturing method for surface-ripened vegan food products are disclosed.

In a **first aspect,** the invention relates to a method for producing a surface-ripened vegan food product, such as a surface-ripened cheese analogue or a surface-ripened meat analogue.

The inventive method for producing a surface-ripened vegan food product is manifested by the steps
a) providing a vegan precursor food product and applying an envelope and microorganisms thereon,
   said envelope
   - being in direct physical contact with the surface of the vegan precursor food product, and
   - being permeable for metabolites produced by the microorganisms and for the microorganisms themselves and for components of the vegan precursor food product and for gaseous elements, in particular surrounding air;
b) ripening the vegan precursor food product within the envelope; and
c) removing the envelope to thereby obtain the vegan food product.

The envelope is removed after ripening and prior to sale or consumption, preferably prior to sale.

As is known for traditional methods for surface-ripening of food products, the microorganisms may be applied either actively or passively.

Actively applying microorganisms means that a defined mix of microorganisms, so called mixed cultures or surface starters, are applied on the precursor food product. Such mixed cultures or surface starters are commercially available.

Passively applying microorganisms means that a certain mix of microorganisms, which is generally present at the production site, starts growing on the precursor food product and thereby initiates the ripening process, without the need to actively apply a defined mix of microorganisms. Thus, the mix of microorganisms that grows on the precursor food product is dependent on the production site. Consequently the particular organoleptic properties of the resulting surface-ripened food product may also depend on the production site.

In the context of the present invention, first the envelope is applied on the vegan precursor food product, e.g. the vegan precursor food product is wrapped in the envelope, and, subsequently, microorganisms are applied on the enveloped precursor food product.

Application of microorganisms - actively and / or passively - allows growing of the microorganisms on the envelope, thereby allowing surface-ripening of the vegan precursor food product.

In a preferred embodiment, after step c), the thus obtained vegan food product is packaged for transport and/or sale in a subsequent step d).

A large variety of vegan foods that are suitable as vegan precursor food products in the context of the present invention are known (e.g. Grossmann et al., Trends in Food Science and Technology 118 (2021):207-229). The skilled person is able to select and combine the various components described herein to obtain suitable vegan precursor food products from which surface-ripened vegan food products can be produced according to the invention.

The vegan food product and the vegan precursor food product, each contain water and at least one of the following components:
- a plant, algae, bacteria or fungus derived polysaccharide component;
- a plant, algae, bacteria or fungus derived protein component;
and optionally in addition a plant, algae, bacteria or fungus derived fat component.

Thus, at least one of the polysaccharide component or protein component are present in the vegan food product and its precursor. Hence, a composition comprising only water and fat component, but no polysaccharide component or protein component, is not suitable as a vegan precursor food product for surface ripening.

In embodiments, both the precursor and the surface-ripened vegan food product contain 25 - 75% (w/w), preferably 35 - 60% (w/w), water.

In embodiments, both the precursor and the surface-ripened vegan food product contain 0 - 75% (w/w), preferably 5 - 75%, more preferably 10 - 50% (w/w), of the plant, algae, bacteria or fungus derived polysaccharide component.

In embodiments, both the precursor and the surface-ripened vegan food product contain 0 - 75% (w/w), preferably, 5 - 75%, more preferably 10 - 50% (w/w), of the plant, algae, bacteria or fungus derived protein component.

In embodiments, both the precursor and the surface-ripened vegan food product contain 0 - 50% (w/w), preferably 5 - 50%, more preferably 10 - 40% (w/w), of the plant, algae, bacteria or fungus derived fat component.

The combination of polysaccharide component, protein component and fat component adds up to at least 25% (w/w), preferably up to at least 40% (w/w), of the vegan food product or its precursor.

Water is present in a quantity such that all components of the vegan precursor food product and vegan food product add up to 100% (w/w).

For example, a suitable vegan food product and / or its precursor may contain 25% of the polysaccharide component and 75% water. In another example, a suitable vegan food product and / or its precursor may contain 25% of the protein component and 75% water.

The water content typically decreases during ripening and thus the water content of the surface-ripened vegan food product is generally lower than the water content of the precursor. The difference in the water content between the surface-ripened vegan food product and the respective precursor varies, but is typically in the range of 3 - 30% (w/w). The decrease in water content typically results in a firmer texture of the vegan food product. The decrease in water content is typically lower than in case surface ripening is performed without an envelope. A decrease of the water content in the range of 3 - 30% is considered beneficial since it aids in shaping of the vegan food product during ripening. However, it is also considered beneficial that the decrease in water content is lower compared to surface ripening without an envelope since a larger loss of water typically leads to a less aromatic product and a reduced yield (i.e. lower mass of the food product).

Preferably, the vegan food product is a cheese analogue or a meat analogue, more preferably a cheese analogue.

Preferably, said method is a method for producing a smear-ripened vegan food product, such as a smear-ripened cheese analogue or a smear-ripened meat analogue, more preferably a smear-ripened cheese analogue.

It was surprisingly found that the process described above enables the manufacturing of a surface-ripened vegan food product.

An advantage of the method when used for smear-ripening is that regular brushing with a smear liquid is not required. Instead, immersing the vegan precursor food product in a smear liquid, optionally containing surface starter organisms, preferably directly after step (a), and afterwards keeping the precursor food product humid is sufficient. However, an additional advantage of the inventive method is that it enables mechanically demanding ripening processes for surface-ripening of vegan food products, thus brushing is possible within the scope of the method. Furthermore, the envelope aids in shaping of the vegan food product during ripening.

Moreover, a surface-ripened vegan food product obtained according to the present invention generally has beneficial properties upon storage in a packaging material. This shall be explained in more detail below.

**Surface-ripened:** The term "surface-ripened" is known in the field of traditional cheese production and is used herein in an analogous way. During traditional surface ripening, food products, such as cheese, generally ripen from their outside surface inward to the interior paste, via microorganisms such as bacteria, yeasts, and/or moulds that are present on the surface of a precursor food product. Said microorganisms generally metabolize organic acids, such as lactic acid, that are present in the precursor food product. Such organic acids are typically present either as a result of fermentation or because of the addition of acidity regulators.

A typical example of surface-ripening is smear-ripening. In smear-ripening, the precursor food product is typically frequently brushed (smeared) with a smear liquid containing microorganisms, such as bacteria, yeasts, moulds and mixtures thereof. Traditional surface-ripened food products, such as smear-ripened cheese, are characterized by the ripening method. For example, a smear-ripened cheese is characterized by a red-orange coloured surface. This red-orange coloured surface typically harbours a complex mixture of microorganisms.

In addition, surface-ripening results in characteristic organoleptic properties of the food product, such as a particularly aromatic taste. Hence the characteristic properties of a surface-ripened food product are a consequence of the method by which it was produced.

The skilled person is aware of the fact that, although being distinct from the organoleptic properties of the food product prior to surface-ripening, organoleptic properties of a surface-ripened food product are dependent on the particular food product and its production site.

Furthermore, the surface-ripening process generally impacts the texture of the vegan food product which results in different characteristics of the surface-ripened product compared to its precursor prior to ripening. The skilled person is aware that the texture of the food product after ripening depends on a complex interplay between different parameters, particularly the water content (decreases during ripening), the change of the pH value (typically increases during ripening) and the degree of proteolysis, each of which may change during ripening. As is known in the field, each of these parameters depends on the specific ripening conditions used (e.g. ripening time, relative humidity, temperature and microorganisms) and the composition of the vegan precursor food product.

By implementing the inventive method, the characteristic ripening process is now applicable to vegan precursor food products to thereby obtain surface-ripened, particularly smear-ripened, vegan food products.

**Polysaccharide component:** The term "polysaccharide" is known in the field and relates to polymeric carbohydrates composed of monosaccharide units bound together by glycosidic linkages, either linear or branched. In the context of the present invention, the polysaccharide component may be any polysaccharide suitable for human consumption that is derived from plants, algae, bacteria or fungi. A large variety of plant, algae, bacteria or fungus derived polysaccharide components are known in the field of vegan food products and are also suitable for the present invention.

Advantageously, the plant, algae, bacteria or fungus derived polysaccharide component is a root or tuber starch, grain starch or algae starch.

The root or tuber starch of the invention may be of any root or tuber source. Root or tuber in this context includes the species of potato (*Solanum tuberosum* or Irish potato), sweet potato (I*pomoea batatas*), manioc (*Manihot esculenta*; tapioca starch), cassava (*Manihot esculenta*, syn. *M. utilissima*), yuca dulce (*M. palmata*, syn. *M. dulcis*), yam (*Dioscorea* spp.), yautia (*Xanthosoma* spp., including *X sagittifolium*), taro (*Colocasia esculenta*), arracacha (*Arracacoa xanthorrhiza*), arrowroot (*Maranta arundinacea*)\ chufa (*Cyperus esculentus*), sago palm (*Metroxylon* spp.), oca and ullucu (*Oxalis tuberosa* and *Ullucus tuberosus*), yam bean and jicama (*Pachyrxhizus erosus* and *P. angulatus*), mashua (*Tropaeolum tuberosum*) and Jerusalem artichoke and topinambur *(Helianthus tuberosus).*

Advantageously, the root or tuber starch, grain starch or algae starch used in the present invention is a starch which can be gelatinized by heating in water. Gelatinization of starch is the disruption and subsequent solubilisation of starch granules into dissolved polysaccharide chains, resulting in increased viscosity of the gelatinized starch mixture, relative to the non-gelatinized starch mixture.

In the context of the present invention, starch may be a modified starch, such as a degraded, enzymatically modified or stabilized starch, as long as the modification does not fully preclude gelatinization of the starch. However, advantageously, the starch is a non-modified starch. Advantageously, the starch is a native starch. Non-modified, in this context, means that the starch has not been chemically or enzymatically modified, although it may have been pre-gelatinized. Native starch in this context means a native, granular starch, such as obtained from the root or tuber. The advantage of using a non-modified or native starch is that such starches can be applied label-free in vegan food products.

An example of a grain starch is corn starch.

Examples of algae starch are agar and alginate.

Advantageously, the plant, algae, bacteria or fungus derived polysaccharide component is a root or tuber starch, grain starch or algae starch selected from the group consisting of tapioca starch, potato starch, corn starch, agar, alginate and mixtures thereof.

**Fat component**: The term "fat" is known in the field and relates to esters of fatty acids, in particular to triglycerides, i.e. triple esters of glycerol with fatty acids. In the context of the present invention, the fat component may be any type of fat or oil suitable for human consumption that is derived from plants, algae, bacteria or fungi.

A fat or oil, in the present context, is a composition comprising at least 95% (w/w), preferably at least 98% (w/w), di- and triglycerides, and is preferably a composition comprising essentially only triglycerides, wherein the quantity of diglycerides is less than 2% (w/w), preferably less than 1% (w/w). The difference between a fat and an oil is that a fat is solid at 20 °C, whereas an oil is liquid at this temperature. Liquid in this context means that the viscosity is such that the oil can flow, even though the liquid may be a viscous liquid.

Advantageously, the plant, algae, bacteria or fungus derived fat component is selected from the group consisting of avocado oil, canola oil, cocoa butter, coconut oil, corn oil, palm oil, safflower oil, sesame oil, sunflower oil, rapeseed oil, algae oil, a cashew nut derived fat component, an almond derived fat component, a soybean derived fat component, a lupine derived fat component, a pea-derived fat component, a yeast derived fat component, and mixtures thereof. Advantageously, the fat or oil component has a bland taste, such as for instance sunflower oil, palm oil, corn oil or soybean oil.

**Protein component**: The term "protein" is known in the field. Proteins generally consist of one or more long chains of amino acid residues. As is convenient in the field, the term protein also includes peptides such as polypeptides or oligopeptides. Peptides containing two to twenty amino acid units are typically referred to as oligopeptides whereas peptides containing more than twenty amino acids are typically referred to as polypeptides.

In the context of the present invention, the protein component may be any type protein or peptide suitable for human consumption that is derived from plants, algae, bacteria or fungi.

Preferably, the protein component is selected from the group consisting of a cashew nut derived protein component, an almond derived protein component, a soybean derived protein component, a lupine derived protein component, a pea derived protein component, a corn derived protein component, a potato derived protein component, a wheat derived protein component, an algae derived protein component, a pseudocereal derived protein component and a yeast derived protein component, and mixtures thereof, more preferably selected from the group consisting of a cashew nut derived protein component and a lupine derived protein component.

A pseudocereal, sometimes also referred to as pseudograin, is one of any non-grasses that are commonly used in the same way as cereals, whereas true cereals are grasses. Pseudocereals can be further distinguished from other non-cereal staple crops, such as potatoes, by their ability to be processed like a cereal, i.e. the seed of pseudocereal can be ground into flour and otherwise be used like a cereal. Suitable pseudocereals are for example buckwheat, quinoa and amaranth, preferably buckwheat and quinoa.

Water: Both the vegan precursor food product and the surface-ripened vegan food product contain water. As described above, the water content typically decreases during ripening. Hence the water content of the surface-ripened vegan product is typically 3 - 30% lower than the water content of the vegan precursor food product. Water may be tap water, suitable for use in human food applications. That is, water must be sufficiently clean, and should not contain excess salts, such as table salt, other minerals or trace elements, microorganisms or toxic components. Water may also be microfiltered prior to use in the preparation of the vegan precursor food product. Water is used in a quantity such that all components of the vegan precursor food product and vegan food product add up to 100% (w/w).

**Additives**: Both the vegan precursor food product and the vegan food product may further comprise various additives, such as flavors, odors and colorants. Suitable additives include various salts, such as sodium or potassium chloride, as well as organic flavors and odors such as citric acid and various esters and aldehydes. Suitable colorants include annatto (a mix of bixine and norbixine as obtained *from Bixa orrelana*) or b-carotene. However, additives are optional and if present must be acceptable to vegans, i.e. being derived from plants, algae, bacteria or fungi.

**Plant, algae, bacteria or fungus derived:** As used herein, the term "plant, algae, bacteria or fungus derived" means that a component present in the vegan food product or in the vegan precursor food product has been obtained from a plants, algae, bacteria or fungi, e.g. by isolation or extraction. However, the term is not limited to an individual pure or substantially pure substance but also includes mixtures of substances obtained from plants, algae, bacteria or fungi or the whole or part of the respective plants, algae, bacteria or fungi. A broad range of plants, algae, bacteria and fungi are known in the field of vegan foods and are also suitable for the present invention.

Suitable plants or parts of such plants are for example cashew, almond, soybean, lupine, pea, corn, potato and wheat.

Suitable algae are for example green algae such as *Chlorella*, e.g. *Chlorella vulgaris.* Suitable bacteria are for example cyanobacteria such as *Arthrospira platensis*, *Arthrospira fusiformis* and *Arthrospira maxima.*

Suitable fungi are for example *Fusarium venenatum.*

The term "plant, algae, bacteria or fungus derived" does not include substances that are obtained from animal sources. Nevertheless, substances that can also be found in animal products are included as long as they have been obtained from plants, algae, bacteria or fungi.

For example, "obtained from bacteria" also includes substances that are generally present in animal products but have been expressed in bacteria using recombinant gene expression methods.

**Vegan food product**: As used herein, vegan food products are foods which are not products of animal origin and which do not contain ingredients of animal origin. Instead, the ingredients are of plant, algae, bacterial or fungus origin, i.e. are derived from plants, algae, bacteria or fungi.

Typical examples of vegan food products are cheese analogues and meat analogues. For the production of both cheese analogues and meat analogues, similar ingredients can be used. Differences in organoleptic properties and texture between the two can be achieved through the addition of flavourings or differences in the production process. However, both cheese analogues and meat analogues are suitable vegan precursor food products that can be surface ripened according to the present invention to thereby obtain a surface-ripened vegan food product, such as a smear-ripened cheese analogue. In the context of the present invention, suitable vegan food products are solid or semi-solid at 20°C, i.e. they can be cut with a knife (cuttable) and / or are spreadable. This is in contrast to any liquid food products such as beverages.

**Vegan precursor food product**: As used herein, the term "vegan precursor food product" relates to an intermediate vegan food product that has not yet been subjected to surface-ripening. Such precursor food product may already be consumed prior to surface ripening. Vegan precursor food products may also be commercially available foods such as commercially available cheese analogues or meat analogues. However, in the context of the present invention, such foods are considered precursor food products unless a surface-ripening has been performed. It is considered advantageous that common commercially available non-surface ripened vegan foods can be used as vegan precursor food products in the context of the present invention. Thus surface-ripened vegan food products according to the invention may be obtained by surface ripening commercially available vegan foods that have not been subjected to surface ripening. In the context of the present invention, suitable vegan precursor food products are solid or semi-solid, i.e. they can be cut with a knife and / or are spreadable. This is in contrast to any liquid food products such as beverages.

A suitable vegan precursor food product may also be made by a method comprising the steps:
- creating a mixture containing water and at least one of the following components:
   a plant, algae, bacteria or fungus derived polysaccharide component, preferably in an amount of 5 - 75% (w/w);
   a plant, algae, bacteria or fungus derived protein component, preferably in an amount of 5 - 75% (w/w);
   and optionally in addition a plant, algae, bacteria or fungus derived fat component, preferably in an amount of 5 - 50% (w/w);
- heating the mixture to a temperature of 70-90 °C; and
- cooling the mixture until being solid or semi-solid.

According to the method of the invention, the microorganisms are cultured on a removable envelope, which is permeable for metabolites produced by microorganisms and for the microorganisms themselves and for components of the vegan precursor food product and for gaseous elements, in particular surrounding air.

The envelope is in direct physical contact with the vegan precursor food product, preferably over its entire surface.

In an advantageous embodiment, the envelope contains pores and/or micropores, preferably pores having a mean pore size in the range of 0.01 mm - 2.00 mm, preferably in the range of 0.1 mm - 1.0 mm, such as 0.3 mm - 0.7 mm.

The mean pore size may be measured by clamping the envelope in a tentering frame and applying to the envelope maximum extension in the elastic range of the envelope (no overstretching of the envelope). The mean pore size can be measured using a microscope, preferably a digital microscope, e.g. an Olympus DSX110 microscope. Typically, the mean pore size is determined from the pores that are visible on a 5.8x5.8 mm sized microscopy image with 48 fold magnification or from a suitable multitude of pores, such as 10 pores that are visible on said microscopy image.

In general, pores can have different shapes. A broad range of pore shapes of the envelope is suitable for the inventive method, e.g. a circular shape or an oval shape, such as an ellipse, or a polygonal shape, such as a quadrangle, pentagon, hexagon, heptagon, octagon, nonagon, or decagon. In case of a circular shape, the pore size relates to the diameter of the pore. In case of a polygonal shape, the pore size can be determined either by measuring the width or the height of the pore, i.e. the distance between the most distant corners (sometimes also referred to as vertices) of a polygonal pore in horizontal ("from left to right") or vertical ("from top to bottom") direction, respectively. Alternatively, pore size can be determined by measuring the distance between the most distant points (e.g. of an oval shape) or corners (e.g. of a polygonal shape) of the pore. In each case, the pore size is measured in the extended state of the envelope as described above. However, the exact method of measuring the mean pore size is not critical as long as the mean pore size is measured in the extended state of the envelope as described above.

Advantageously, the envelope is elastic. Suitable elasticity values are in the range of 10-500%, i.e. the envelope can be elastically extended by 10 - 500% of its size in a non-extended state, measured according to DIN EN 14704-1. More preferably, the envelope is 40-350% elastic, most preferably 50-300% elastic, again measured according to DIN EN 14704-1.

The envelope may have different elastic properties when measured in different directions. For example the envelope may be 10 - 60% elastic, advantageously 40 - 60% elastic, in one direction and 50 - 300%, advantageously 100 - 200% elastic in the other direction.

Advantageously, the envelope has a density (g/m^2) of 50 - 300 g/m^2, more advantageously 100 - 200 g/m^2, most advantageously 120 - 150 g/m^2.

Suitable fabrics complying with the elasticity and porosity as defined above are known in the field and commercial items. In an advantageous embodiment, the envelope contains, particularly consists of, knitted fabrics or woven fabrics or non-woven fabrics, in particular knitted fabrics or woven fabrics, most preferably knitted fabrics.

Preferably, the envelope contains materials selected from the group consisting of natural or synthetic polymeric materials and mixtures thereof.

Natural polymeric materials may be selected from the group consisting of cellulose, cotton, wool, silk, cashmere and mixtures thereof.

Synthetic materials may be selected from the group consisting of cellulose-derivatives such as cellulose acetate and nitrocellulose, polyamides such as nylon, elastomers, polyurethanes, polyolefins such as polypropylenes, polyesters such as polyethylene terephthalate (PET), polyethylene glycols (PEG), acrylics and mixtures thereof. Elastane (synonymously spandex or lycra) is a mixture of polyurethane and polyethylene glycol.

In addition, suitable synthetic materials may also be made from and/or contain natural polymeric materials, in particular cellulose, and/or cellulose-derivatives such as cellulose acetate and nitrocellulose. Such synthetic materials are sometimes also referred to as semi-synthetic materials. A suitable example of such a synthetic (or semi-synthetic) material is rayon, particularly lyocell, modal and micromodal.

Cellulose derivatives include materials containing a characteristic backbone of cellulose wherein one or more of the hydroxyl groups are substituted, e.g. by nitro- or acetate groups.

In an advantageous embodiment, the envelope contains cellulose and/or cellulose derivatives such as cellulose acetate and nitrocellulose. Preferably, the envelope contains cellulose or cellulose derivatives that have been obtained from hard wood, in particular obtained from beech tree.

Modal is a form of rayon and consists of cellulose and/or cellulose derivatives as defined above. Micromodal is a finer variant of modal. Micromodal fibres have a diameter of less than 10 µm (microfibre). The term "micromodal" as used herein is thus synonymous to "modal fibres having a diameter of 0.1 - 10 µm".
In an advantageous embodiment, the envelope contains modal or micromodal.

Lyocell is a form of rayon and consists of cellulose and/or cellulose derivatives as defined above. In another advantageous embodiment, the envelope contains lyocell.

As is known in the field, lyocell, modal and micromodal can be made from the same raw materials but differ in their manufacturing process. These differences in the manufacturing process result in different characteristic properties of the so-obtained material. The respective manufacturing processes are known in the field.

In an advantageous embodiment, the envelope contains elastane (synonymously spandex, lycra).

In an advantageous embodiment, the envelope consists of a mixed fabric containing cellulose or cellulose derivatives and elastane.

In a particularly advantageous embodiment, the envelope consists of a mixed fabric containing, preferably consisting of, (i) modal or micromodal and (ii) elastane.

In an advantageous embodiment, the envelope consists of a mixed fabric containing, preferably consisting of, (i) 80-95% modal or micromodal, and (ii) 5-20% elastane. A particularly suitable envelope consists of (i) 92% modal or micromodal and (ii) 8% elastane.

An example of such an envelope is an envelope consisting of the fabric "26319/1, 28 E Single Jersey Micromodal-Elastane".

In an advantageous embodiment, the envelope contains 0-100% polyamide, 0-60% elastane, 0-70% polyurethane, 0-40% polypropylene and 0-70% cotton.

Preferably, the envelope contains, more preferably consists of, materials that are biodegradable. Examples of biodegradable materials are modal, micromodal and lyocell.

Preferably, the envelope has a thickness of between 0.001 mm - 1.0 mm, preferably 0.01 mm - 0.1 mm. The envelope may thus also be a sheet-like material or a thin film.

The size, i.e. the surface area, of the envelope is adapted to the surface area of the vegan precursor food product to which it is applied. The envelope must cover the whole surface of the vegan precursor food product. Thus, in an elastically extended state, the surface area of the envelope is at least identical to the surface area of the vegan precursor food product, preferably the surface area of the envelope is in an elastically extended state larger than the surface area of the vegan precursor food product. However, in the unextended state, the surface area of the envelope is typically smaller than or identical to the surface area of the vegan precursor food product. Once wrapped, the elastic extension of the envelope leads to a surface area of the envelope that is identical or greater than the surface area of the vegan precursor food product.

Typically, in the unextended state, the envelope has a surface area of between 10 cm^2 to 20000 cm^2, preferably of between 50 cm^2 to 5000 cm^2.

Preferably, the envelope contains knitted or woven-fabrics, preferably knitted fabrics, consisting of yarns having a linear mass density (i.e. the thickness of a yarn in only one dimension; also referred to as linear density) of 5-165 DTEX, preferably 10-120 DTEX, more preferably 15-100 DTEX.

The linear mass density of a yarn can be measured according to DIN EN ISO 2060. An alternative unit for expressing the linear mass density of a yarn is "metric count (Nm)". The unit "Nm" is defined as the number of meters per gram of fiber or yarn. For example, 50.8 Nm correspond to 50.8 m per gram of yarn.

Thus in an advantageous embodiment, the envelope contains knitted or woven-fabrics, preferably knitted fabrics, consisting of yarns having a linear mass density of 2.000-61 Nm, preferably 667-83 Nm, more preferably 667-400 Nm.

In another advantageous embodiment, the envelope prevents or at least reduces spread of mould mycelium on the surface of the vegan food product or vegan precursor food product. Preferably, the envelope serves as a physical barrier against the spread of mould mycelium. The inventive method therefore alleviates the need for frequent mechanical brushing of a vegan precursor food product.

In another advantageous embodiment, before step a) the envelope is elastically extended and applied in step a) in such an at least partially elastically extended state.

In another advantageous embodiment, in step (b) ripening is achieved by
(b1) immersing the enveloped vegan precursor food product in a smear liquid, optionally containing surface starter organisms; and afterwards
(b2) keeping the vegan precursor food product humid by spraying onto said vegan precursor food product water, optionally water containing 2-10% (w/w) sodium chloride.

Preferably, in step (b2), water, optionally containing 2-10% (w/w) sodium chloride, is sprayed onto the enveloped vegan precursor food product 3-5 times per week until growth of the microorganisms within the smear layer has started. Then, the frequency of spraying can be reduced stepwise to 1-2 times per week until the ripening process is complete.

Hence, a further advantage of the method is that brushing of the surface of the vegan precursor food product with a smear liquid is not required. Nevertheless, brushing is possible within the scope of the method.

In a **second aspect**, the invention further relates to a surface-ripened vegan food product having a composition as described above (first aspect of the invention) that is obtainable or obtained by the manufacturing method described above (first aspect).

Preferably, the surface-ripened vegan food product is a surface-ripened cheese analogue or a surface-ripened meat analogue, more preferably a surface-ripened cheese analogue.

Preferably, the surface-ripened vegan food product is a smear-ripened vegan food product, such as a smear-ripened cheese analogue or smear-ripened meat analogue, more preferably a smear-ripened cheese analogue.

Due to the removal of the envelope with thereon adherent part of a surface, e.g. a smear-surface, the inventive method in particular leads to a surface-ripened vegan food product, particularly a surface-ripened cheese analogue, e.g. a smear-ripened cheese analogue, that is less susceptible to developing an off-odour after storage in a packaging material, in particular an air-tight packaging material, than an otherwise identical surface-ripened food product that was not ripened in an envelope and which was removed prior to packaging.

A surface-ripened cheese analogue, particularly a smear-ripened cheese analogue, according to the invention or a piece of said surface-ripened cheese analogue, typically maintains, or at least partially maintains, the optical characteristics of a traditional surface-ripened cheese, particularly a traditional smear-ripened cheese.

In an advantageous embodiment, a surface-ripened vegan food product, particularly a smear-ripened cheese analogue, or a piece of said surface-ripened vegan food product, according to the invention has a red-orange or brownish surface.

It is clear to the person skilled in the art that the various types of vegan food products differ in their exact composition and physical properties. As is known for traditional surface-ripened cheese, surface-ripened vegan food products of the same type that were produced at different sites can also differ in their composition and physical properties. Nevertheless, the characteristic properties of a given surface-ripened vegan food product, particularly a cheese analogue, can be determined by one or more of the methods described below.

Hence, in order to determine if a surface-ripened vegan food product was produced according to the method of the invention, a surface-ripened vegan food product having the same composition as the product in question (or a statistically significant number thereof) can be produced by the method of the invention and be used as reference material. Comparison of a surface-ripened vegan food product with this reference material thus offers a possibility to determine if a surface-ripened vegan food was produced by the method of the invention.

For example, the water content of the so-produced reference surface-ripened vegan food product can be measured after 1, 2, 3 and/or 4 months of ripening and compared to the vegan food product in question. The water content can be measured according to Agroscope method 13.8 ME.068 (accredited according to ISO/IEC 17025:2017) as of date 25.02.2019, available from Agroscope upon request.

Alternatively, the total count of microorganisms calculated based on the surface area of the so-produced reference surface-ripened vegan food product, particularly smear-ripened cheese analogue, can be measured and compared to the vegan food product in question.

In particular, said total count of microorganisms relates to microorganisms selected from the group consisting of anaerobic bacteria, aerobic bacteria, yeasts, moulds and mixtures thereof.

Various methods for the determination of such microorganisms are known in the art. Such methods are routinely performed by certified laboratories such as the Laboratoire agroalimentaire fribourgeois (LAAF). Exemplary methods are described in "Amato, Lea; ETH Diss. No. 21744; Impact of different packaging films on smear microflora composition, metabolic activity and quality of red-smear cheeses during cold storage".

Typically, a surface-ripened vegan food product according to the invention, particularly a smear-ripened cheese analogue, or a piece thereof, has a residual surface layer, particularly a residual smear layer, with a mean thickness of between 0.05 mm to 0.2 mm, preferably 0.05 mm to 0.1 mm.

The mean thickness of the residual surface layer, particularly the residual smear layer, can be measured by microscopy, e.g. using an Olympus DSX110 microscope.

An advantage of a surface-ripened vegan food product produced according to the method of the invention, particularly a smear-ripened cheese analogue, or a piece thereof, is that it typically leads to less off-flavouring during storage in an air-tight (or essentially air-tight) packaging than typical surface-ripened food products, e.g. a traditional smear-ripened cheese, that that was not produced according to the method of the invention. An air-tight (or essentially air-tight) packaging is a packaging leading to an anaerobic environment.

The group of substances which contribute to the off-flavouring ("off-flavour compounds") comprises ammonia and low molecular weight sulphur compounds such as methanethiol, hydrogen sulphide, dimethyl sulphide (DMS), dimethyl disulphide (DMDS), dimethyl trisulphide (DMTS) and carbonyl sulphide. Moreover, sulphur compounds may interact with each other and with other compounds in the food product, generating other volatile off-flavour compounds.

Volatile off-flavour compounds can be determined according to the following methods:

The amount of ammonia can be measured according to Agroscope method 13.6.ME.089 (accredited according to ISO/IEC 17025:2017) as of date 20.12.2019, available from Agroscope upon request.

The amount of ammonia and also other volatile off-flavour compounds can be measured according to Agroscope method 18.6.3.AA.003 ("Flüchtige Komponenten in Lebensmitteln mit Purge & Trap/GC") as of date 03.01.2014 and/or Agroscope method 18.6.3.AA.002 ("HS-SPME/GC - Flüchtige Komponenten in Lebensmitteln") as of date 03.01.2014. Both methods are available from Agroscope upon request.

In a **third aspect**, the invention further relates to a smear-ripened vegan food product having a composition as described above in the context of surface-ripened vegan food products (first aspect and second aspect of the invention).

The vegan food product contains water, preferably in an amount of 25 - 75% (w/w) and at least one of the following components:
- a plant, algae, bacteria or fungus derived polysaccharide component, preferably in an amount of 5 - 75% (w/w);
- a plant, algae, bacteria or fungus derived protein component, preferably in an amount of 5 - 75% (w/w).

Optionally, the smear-ripened vegan food product additionally contains a plant, algae, bacteria or fungus derived fat component, preferably in an amount of 5 - 50% (w/w).

As described above (first aspect), the combination of polysaccharide component, protein component and fat component adds up to at least 25% (w/w) of the vegan food product or its precursor. Water is present in a quantity such that all components of the vegan precursor food product and vegan food product add up to 100% (w/w).

For example, a smear-ripened vegan food product according to the invention may contain 25% of the polysaccharide component and 75% water. In another example, a smear-ripened vegan food product according to the invention may contain 25% of the protein component and 75% water.

As described above (first aspect), the vegan food product is solid or semi-solid, i.e. it can be cut with a knife (cuttable) and / or is spreadable.

Preferably, the smear-ripened vegan food product, e.g. a smear-ripened cheese analogue or a smear-ripened meat analogue, is a smear-ripened cheese analogue.

Advantageously, the inventive smear-ripened vegan food product complies with the characteristics defined above generally in the context of a surface-ripened vegan food product obtained by the inventive manufacturing method described herein (second aspect and first aspect of the invention, respectively).

For example, a smear-ripened vegan food product according to the invention, particularly a smear-ripened cheese analogue, or a piece thereof, typically has a residual smear layer with a mean thickness of between 0.05 mm to 0.2 mm, preferably 0.05 mm to 0.1 mm.

The mean thickness of the smear layer, can be measured by microscopy, e.g. using an Olympus DSX110 microscope.

A **fourth aspect** of the invention relates to the use of a sheet-like porous material (e.g. an envelope) in a method for producing a surface-ripened vegan food product. The sheet-like material is as defined above in the context of an envelope (first aspect of the invention).

**A fifth aspect** of the invention relates to a **vegetarian hybrid food product** and a method of manufacturing thereof from a **vegetarian hybrid precursor food product.** As used herein, the terms "vegetarian hybrid food product" and "vegetarian hybrid precursor food product" relate to foods which contain at least 10% (w/w), such as 10% - 90% (w/w), preferably, 50 - 90% (w/w), more preferably 70% - 80% (w/w) vegan ingredients, i.e. plant, algae, bacteria or fungus derived components as described herein. However, in order to more closely mimic the characteristic properties of traditional vegetarian, but non-vegan, products, particularly cheese, such vegetarian hybrid food products and their corresponding precursors additionally contain vegetarian ingredients, particularly dairy ingredients, such as milk and processed dairy products, e.g. cheese. Such additional components, despite being derived from animal sources, e.g. milk or processed dairy products, must be acceptable to vegetarians, i.e. not being meat or meat products. Furthermore, animal rennet must not be used in the coagulation process of the dairy products.

Such products are sometimes also referred to as "blended vegetarian foods". The inventive method described herein (first aspect) is likewise applicable to vegetarian hybrid food products and corresponding precursor food products, in particular the parameters defined in the context of the envelope and the process steps apply likewise. Further, definitions of plant, algae, bacteria or fungus derived polysaccharide components, protein components and fat components apply likewise.

In this aspect, the invention provides for a method for producing a surface-ripened vegetarian hybrid food product from a vegetarian hybrid precursor food product, characterized in that the method comprises the steps:
(a) providing a vegetarian hybrid precursor food product and applying an envelope and microorganisms thereon,
   said envelope
   - being in direct physical contact with the surface of the vegetarian hybrid precursor food product, and
   - being permeable for metabolites produced by the microorganisms and for the microorganisms themselves and for components of the vegetarian hybrid precursor food product and for gaseous elements, in particular surrounding air; and (b) ripening the vegetarian hybrid precursor food product within the envelope; and (c) removing the envelope to thereby obtain the vegetarian hybrid food product; and wherein the vegetarian hybrid food product and the vegetarian hybrid precursor food product, each contain water and at least one of the following vegan components:
   - a plant, algae, bacteria or fungus derived polysaccharide component;
   - a plant, algae, bacteria or fungus derived protein component;
   and optionally in addition a plant, algae, bacteria or fungus derived fat component; and wherein the vegetarian hybrid food product and the vegetarian hybrid precursor food product further contain at least one of the following vegetarian but non-vegan components:
   - a polysaccharide component, preferably in an amount of 5 - 75% (w/w);
   - a protein component, preferably in an amount of 5 - 75% (w/w); and
   - a fat component, preferably in an amount of 5 - 75% (w/w),
   and wherein the ratio of vegan to vegetarian components is between 1:9 to 9:1 (w/w).

In this aspect, the invention further relates to a vegetarian hybrid food product containing water, preferably in an amount of 25 - 75% (w/w) and at least one of the following vegan components:
- a plant, algae, bacteria or fungus derived polysaccharide component, preferably in an amount of 5 - 75% (w/w);
- a plant, algae, bacteria or fungus derived protein component, preferably in an amount of 5 - 75% (w/w);
and optionally in addition a plant, algae, bacteria or fungus derived fat component, preferably in an amount of 5 - 50% (w/w);
and wherein the vegetarian hybrid food product further contains at least one of the following vegetarian but non-vegan components:
- a polysaccharide component, preferably in an amount of 5 - 75% (w/w);
- a protein component, preferably in an amount of 5 - 75% (w/w); and
- a fat component, preferably in an amount of 5 - 50% (w/w);
wherein the ratio of vegan to vegetarian components is between 1:9 to 9:1 (w/w), characterized in that the vegetarian hybrid food product is
- smear-ripened; and
- solid or semi-solid at 20°C.

**A sixth aspect** of the invention relates to a **meat hybrid food product** and a method of manufacturing thereof from a **meat hybrid precursor food product**: As used herein, the terms "meat hybrid food product" and "meat hybrid precursor food product" relate to foods which contain at least 10% (w/w), such as 10% - 90% (w/w), preferably, 50 - 90% (w/w), more preferably 70% - 80% (w/w) vegan ingredients, i.e. plant, algae, bacteria or fungus derived components as described herein. However, in order to more closely mimic the characteristic properties of traditional meat products, such meat hybrid food products and their corresponding precursors additionally contain non-vegetarian animal derived components, particularly meat or processed meat components Such meat or processed meat components contain animal derived polysaccharide components, animal derived protein components and/or animal derived fat components. Such products are sometimes also referred to as "blended meat". The inventive method described herein is likewise applicable to meat hybrid food products and corresponding precursor food products, in particular the parameters defined in the context of the envelope and the process steps apply likewise. Further, definitions of plant, algae, bacteria or fungus derived polysaccharide components, protein components and fat components apply likewise.

In this aspect, the invention provides for a method for producing a surface-ripened meat hybrid food product from a meat hybrid precursor food product, characterized in that the method comprises the steps:
(a) providing a meat hybrid precursor food product and applying an envelope and microorganisms thereon, said envelope
   - being in direct physical contact with the surface of the meat hybrid precursor food product, and
   - being permeable for metabolites produced by the microorganisms and for the microorganisms themselves and for components of the meat hybrid precursor food product and for gaseous elements, in particular surrounding air; and
(b) ripening the meat hybrid precursor food product within the envelope; and
(c) removing the envelope to thereby obtain the meat hybrid food product; and wherein the meat hybrid food product and the meat hybrid precursor food product, each contain water and at least one of the following vegan components:
   - a plant, algae, bacteria or fungus derived polysaccharide component;
   - a plant, algae, bacteria or fungus derived protein component;
   and optionally in addition a plant, algae, bacteria or fungus derived fat component; and wherein the meat hybrid food product and the meat hybrid precursor food product further contain non-vegetarian animal derived components:
   - a protein component, preferably in an amount of 5 - 75% (w/w); and
   - optionally a polysaccharide component, preferably in an amount of 5 - 75% (w/w); and / or
   - optionally a fat component, preferably in an amount of 5 - 50% (w/w), wherein the ratio of vegan to animal-derived components is between 1:9 to 9:1 (w/w).

In this aspect, the invention further relates to a meat hybrid food product containing water, preferably in an amount of 25 - 75% (w/w) and at least one of the following vegan components:
- a plant, algae, bacteria or fungus derived polysaccharide component, preferably in an amount of 5 - 75% (w/w);
- a plant, algae, bacteria or fungus derived protein component, preferably in an amount of 5 - 75% (w/w);
and optionally in addition a plant, algae, bacteria or fungus derived fat component, preferably in an amount of 5 - 50% (w/w); and wherein the meat hybrid food product further contains at least one of the following non-vegetarian animal derived components:
- a protein component, preferably in an amount of 5 - 75% (w/w); and
- optionally a polysaccharide component, preferably in an amount of 5 - 75% (w/w); and / or
- optionally a fat component, preferably in an amount of 5 - 50% (w/w); wherein the ratio of vegan to animal-derived components is between 1:9 to 9:1 (w/w), characterized in that the meat hybrid food product is
- smear-ripened; and
- solid or semi-solid at 20°C.

### Brief Description of the Drawings

The invention will be better understood and objects other than those set forth above will become apparent when consideration is given to the following detailed description thereof. This description makes reference to the annexed drawings, wherein:

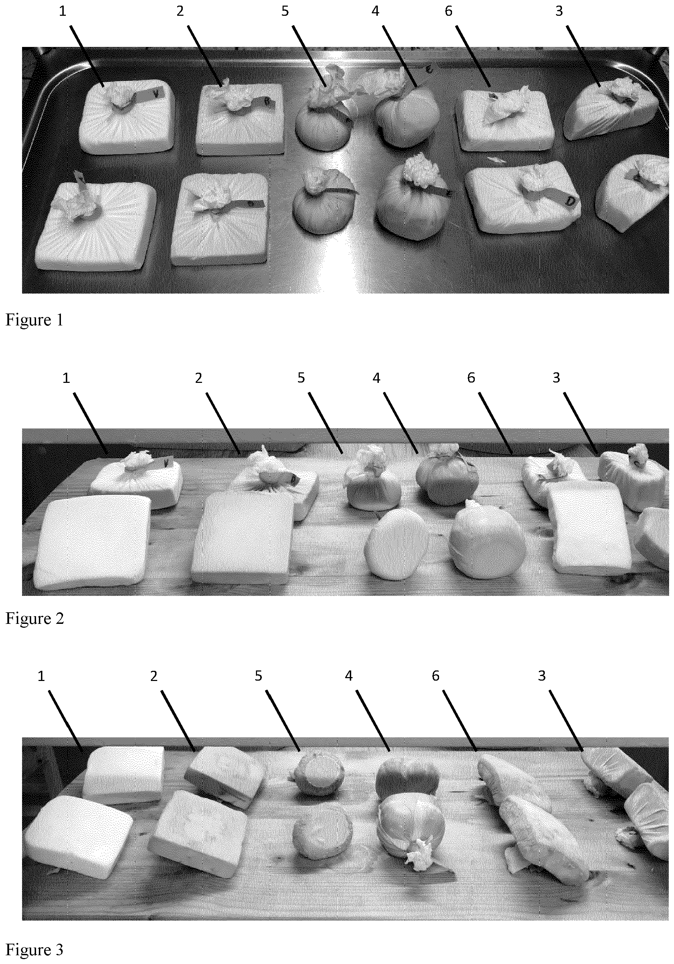

Figure 1: Picture of 5 vegan precursor food products and a reference dairy product prior to surface-ripening, each fully covered with an envelope having the characteristics described in the examples (general procedure). 1 = Example 1; 2 = Example 2; 3 = Example 3; 4 = Example 4; 5 = Example 5; 6 = Example 6 (reference).
Figure 2: Picture of 5 vegan precursor food products and a reference dairy product after 5 days of surface-ripening, as described in the examples (general procedure). A red-orange coloured surface is visible, indicating that the surface microflora started to grow and that surface-ripening has started.
   1 = Example 1; 2 = Example 2; 3 = Example 3; 4 = Example 4; 5 = Example 5; 6 = Example 6 (reference).
Figure 3: Picture of 5 vegan precursor food products and a reference dairy product after 12 days of surface-ripening, as described in the examples (general procedure). The red-orange colour of the surface is more intense than after 5 days of surface-ripening. This indicates that surface-ripening has progressed between day 5 and day 12. 1 = Example 1; 2 = Example 2; 3 = Example 3; 4 = Example 4; 5 = Example 5; 6 = Example 6 (reference).

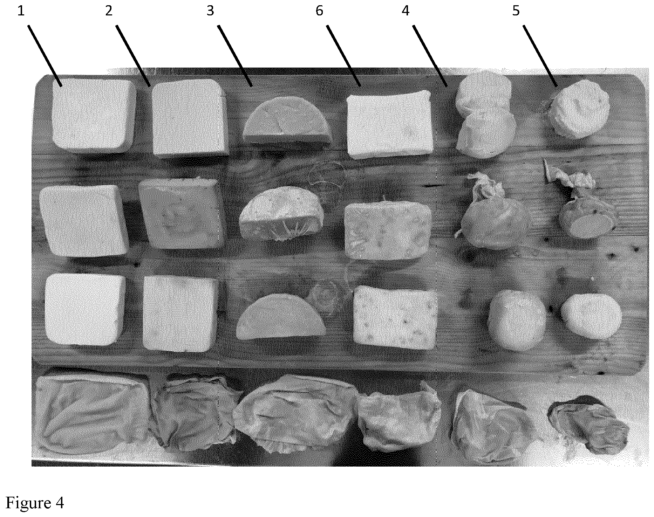

Figure 4: Picture of 5 vegan precursor food products and a reference dairy product after 12 days of surface-ripening, as described in the examples (general procedure). In each row, from the top to the bottom are shown: Control (no surface ripening), surface-ripened vegan food products and reference prior to removing the envelope, surface-ripened vegan food products and reference prior after removing the envelope, envelopes with thereon adherent part of the surface.

Approximately 90% (w/w) of the surface was removed by removing the envelope. Vegan food products have a red-orange-or brownish-coloured surface even after removing the envelope, resembling the colour of a traditional smear-ripened cheese. 1 = Example 1; 2 = Example 2; 3 = Example 3; 4 = Example 4; 5 = Example 5; 6 = Example 6 (reference).

### EXAMPLES

To further illustrate the invention, the following examples are provided. These examples are provided with no intend to limit the scope of the invention.

The following examples were performed with commercially available vegan foods that were used as vegan precursor food products for the inventive method.

At least 5 different vegan precursor food products were commercially obtained and surface-ripened according to the inventive method. In addition, one dairy product was used as a reference and subjected to surface-ripening using the same method. At least two of each vegan precursor food products and the reference were subjected to surface-ripening (duplicates).

In addition, different envelopes (table 1) were characterized and are considered suitable for producing a surface-ripened vegan food product according to the invention.

Although the tested vegan precursor food products are considered cheese analogues and surface-ripening was performed using a smear-liquid ("smear-ripening"), the inventive method is likewise applicable to other vegan foods, such as meat analogues, and may be likewise performed using other ripening methods (e.g. different temperature of different relative humidity) and/or microorganisms such as *Penicillium camemberti* and *Penicillium nalgiovense*, provided their safety for use in food products has been evaluated, e.g. by full genome sequencing followed by sequence analysis.

### General procedure:

Envelope D with the below listed characteristics was applied on commercially available vegan precursor food products such that the envelope was in direct physical contact with the vegan precursor food product over its entire surface (cf. Fig. 1). The envelope was permeable for metabolites produced by microorganisms and for microorganisms themselves and for gaseous elements, in particular surrounding air. The envelope had a density of 135 g/m^2 +/- 5%. The envelope was 53% +/- 5% elastic in one direction and 143% +/- 10% elastic in the other direction, as measured according to DIN EN 14704-1, and contained pores with a mean pore size of 0.05 - 0.5 mm (extended state). The envelope contained knitted fabrics consisting of yarns having a linear mass density of 100 DTEX. The envelope was biodegradable according to the "cradle to cradle" (C2C) standard.

### The envelope was in an elastically extended state before applying on the vegan precursor food product.

Exemplary types of envelopes and their characteristics are listed in table 1 below.

**Table 1. Exemplary envelopes**

| **Specification** | **Envelope A** | **Envelope B** | **Envelope C** | **Envelope D** |
|---|---|---|---|---|
| Mean pore size extended state | 0.3-0.6 mm | 0.2-0.7 mm | 0.2-1.0 mm | 0.05-0.5 mm |
| Linear mass density | 17 DTEX | 22 DTEX | 17 DTEX | 100 DTEX |
| | 588 Nm | 455 Nm | 588 Nm | 100 Nm |
| Material | | | | |
| Polyamide | 90% | 100% | 79% | 0% |
| Elastane | 10% | 0% | 21% | 8% |
| Micromodal | 0% | 0% | 0% | 92% |

Directly after applying the envelope, the vegan precursor food products were immersed in a smear liquid containing 5% (w/w) sodium chloride and 1% (w/w) of a standardized mixed culture (OMK 704), available from Agroscope. The mixed culture (CFU>10^5 as determined on SC-Agar at 30°C for 5 d under aerobic conditions) contained a combination of Arthrobacter ssp., Corynebacterium ssp., Brevibacterium linens and Debaryomyces hansenii.

Subsequently, the enveloped vegan precursor food products were stored (ripened) for 12 days at 14 - 15°C at 90-96% RH. During ripening, the vegan precursor food products were sprayed 1-2 times per week with the smear liquid described above.

As control, for each vegan precursor food product, an identical control sample was stored in its commercial packaging material at 4°C for 12 days (no treatment with smear-liquid).

After 5 days of ripening, a red-orange or brownish-coloured surface, as is characteristic for traditional smear-ripened cheese, had developed on all tested vegan precursor food products (cf. Fig. 2). The intensity of the colour varied between the different products but was visible in all cases.

After 12 days of ripening, the envelope was removed together with thereon adherent part of a smear layer. Approximately 90% (w/w) of the total smear layer was thereby removed (cf. Fig. 3 and 4). Although longer ripening times are envisaged, ripening for two weeks was already sufficient to obtain surface-ripened vegan food products, having a red-orange or brownish-coloured surface as is characteristic for traditional smear-ripened cheese. The obtained surface-ripened vegan products had aromatic and taste characteristics closer to a traditional smear-ripened cheese than the respective precursor food products. The surface-ripened vegan products showed a significant difference in the organoleptic properties, particularly the taste, and the texture (firmer texture after ripening) compared to the respective control products (i.e. vegan precursor food products that were stored at 4° instead of being surface-ripened in an envelope).

In addition, the pH value increased in all exemplary vegan food products.

Results of biochemical analysis of illustrative surface-ripened vegan food products are shown in table 2.

### Example 1:

Composition of vegan precursor food product: Water, coconut oil (29% w/w), starch, salt, glucono-delta-lactone (acidity regulator), flavourings, olive extract, vitamin B12 (cyanocobalamin).
Commercial name: Violife Greek White

This vegan precursor food product is an example of a product that has been acidified through the addition of glucono-delta-lactone as acidity regulator.

### Example 2:

Composition of vegan precursor food product: Water, coconut oil (24% w/w), modified starch, starch, salt, sunflower seed flour, mature cheddar flavour, lactic acid (acidity regulator), olive extract, colour (beta-carotene), vitamin B12 (cyanocobalamin) Commercial name: Violife Epic Mature

This vegan precursor food product is an example of a product that has been acidified through the addition of lactic acid as acidity regulator. After 12d of ripening the concentration of lactic acid decreased due to metabolism of the surface microorganisms.

### Example 3:

Composition of vegan precursor food product: Water, potato flakes, coconut oil, chick-pea flour, nutritional yeast (11% w/w), salt, natural flavours
Commercial name: Gondino

### Example 4:

Composition of vegan precursor food product: Rejuvelac (germinated water, quinoa and fenugreek), coconut oil, cashews, hulled almonds (12.5% w/w), powdered psyllium husk (2% w/w), extra virgin olive oil, salt.
Commercial name: Fermaggio Mezzarella

This is an example of a fermented vegan precursor food product containing lactic acid produced during fermentation. After 12d of ripening the concentration of lactic acid decreased due to metabolism of the surface microorganisms.

In this example, the shape of the vegan food product was significantly impacted by the envelope.

### Example 5:

Composition of vegan precursor food product: Cashews (60% w/w), water, salt, vegan cheese cultures
Commercial name: New Roots La Cotta

This is an example of a fermented vegan precursor food product containing lactic acid produced during fermentation. After 12d of ripening the concentration of lactic acid decreased due to metabolism of the surface microorganisms.

In this example, the shape of the vegan food product was significantly impacted by the envelope.

### Example 6:

Reference cheese (paneer; dairy product; vegetarian)
Composition: Milk, salt, citric acid (E 330; acidity regulator).
This is a dairy product with a relatively solid texture and was used as a reference material. Shape and texture of the reference material were similar to examples 1 and 2.

**Table 2. Results of biochemical analysis after 12 days of ripening**

| Example | Water content [g/kg] | pH | Total lactic acid [mmol/kg] | Percentage L-lactic acid [% mmol/mmol] | OPA-value (free amino acids) [mmol/kg] |
|---|---|---|---|---|---|
| Example 1; control | 606 | 3.45 | 0 | 0 | 0.6 |
| Example 1; smear-ripened | 576 | 5.67 | 9.6 | 46.8 | 4.1 |
| Example 2; control | 513 | 4.17 | 22.1 | 100 | 20.6 |
| Example 2; smear-ripened | 512 | 4.76 | 9.5 | 100 | 10.4 |
| Example 3; control | 365 | 5.21 | 0 | 0 | 26.8 |
| Example 3; smear-ripened | 388 | 5.44 | 0 | 0 | 23.0 |
| Example 4; control | 562 | 4.65 | 46.2 | 37.1 | 21.0 |
| Example 4; smear-ripened | 531 | 6.5 | 14.2 | 39.5 | 19.9 |
| Example 5; control | 575 | 4.65 | 66.1 | 100 | 17.1 |
| Example 5; smear-ripened | 469 | 4.99 | 61.8 | 58 | 12.6 |
| Reference; control | 489 | 5.61 | 0 | 0 | 1.2 |
| Reference; smear-ripened | 504 | 5.95 | 13.7 | 100 | 29.0 |

The following analysis methods were used to obtain the results listed in table 2.

### Water content (Loss on drying):

The water content was measured according to Agroscope method 13.8.ME.068 (accredited according to ISO/IEC 17025:2017), as of date 25.02.2019, available from Agroscope upon request.

### pH value:

The pH value was measured at the center of the vegan food product according to Agroscope method 13.8.ME.056 (accredited according to ISO/IEC 17025:2017) as of date 12.02.2019, available from Agroscope upon request.

### Total lactic acid:

Total lactic acid was measured according to Agroscope method 13.6 ME.026 (accredited according to ISO/IEC 17025:2017) as of date 04.03.2014, available from Agroscope upon request. The amount of total lactic acid is considered the sum of L-lactic acid and D-lactic acid.

### L-lactic acid:

L-lactic acid was measured according to Agroscope method 13.6 ME.026 as of date 04.03.2014, available from Agroscope upon request.

### OPA value:

Free amino acids (OPA value) were measured according to Agroscope method 13.6 ME.020 (accredited according to ISO/IEC 17025:2017) as of date 06.10.2020, available from Agroscope upon request.

The surface-ripened vegan food products had a residual smear layer with a mean thickness of about 0.1 mm.

While there are shown and described presently preferred embodiments of the invention, it is to be distinctly understood that the invention is not limited thereto but may be otherwise variously embodied and practiced within the scope of the following claims.

## Claims

1. A **method for producing** a surface-ripened vegan food product from a vegan precursor food product, **characterized in that**
the method comprises the steps
(a) providing a vegan precursor food product and applying an envelope and microorganisms thereon,
said envelope
• being in direct physical contact with the surface of the vegan precursor food product, and
• being permeable for metabolites produced by the microorganisms and for the microorganisms themselves and for components of the vegan precursor food product and for gaseous elements, in particular surrounding air; and
(b) ripening the vegan precursor food product within the envelope; and
(c) removing the envelope to thereby obtain the vegan food product; and
wherein the vegan food product and the vegan precursor food product, each contain water and at least one of the following components:
• a plant, algae, bacteria or fungus derived polysaccharide component;
• a plant, algae, bacteria or fungus derived protein component;
and optionally in addition a plant, algae, bacteria or fungus derived fat component.

2. The method according to claim 1,
wherein the surface-ripened vegan food product is a surface-ripened cheese analogue, particularly a smear-ripened cheese analogue.

3. The method according to claim 1 or 2,
wherein the plant, algae, bacteria or fungus derived polysaccharide component is a root or tuber starch, grain starch, algae starch or a mixture thereof, preferably selected from the group consisting of tapioca starch, potato starch, corn starch, agar, alginate and mixtures thereof; and
wherein the protein component is selected from the group consisting of a cashew nut derived protein component, an almond derived protein component, a soybean derived protein component, a lupine derived protein component, a pea derived protein component, a corn derived protein component, a potato derived protein component, a wheat derived protein component, an algae derived protein component, a pseudocereal derived protein component, a yeast derived protein component, and mixtures thereof; and
wherein the plant, algae, bacteria or fungus derived fat component is selected from the group consisting of avocado oil, canola oil, cocoa butter, coconut oil, corn oil, palm oil, safflower oil, sesame oil, sunflower oil, rapeseed oil, algae oil a cashew nut derived fat component, an almond derived fat component, a soybean derived fat component, a lupine derived fat component, a pea-derived fat component, a yeast derived fat component, and mixtures thereof.

4. The method according to any one of claims 1 to 3,
wherein the envelope contains pores having a mean size in the range of 0.01 mm - 2.00 mm, wherein the mean size relates to
a) in case of a circular pore, the pore size relates to the diameter of the pore; or
b) in case of an oval or polygonal shape of the pore, the pore size relates to the distance between the most distant points or corners of the pore
as measured by light microscopy, preferably according to the following protocol:
(i) clamping the envelope in a tentering frame; and
(ii) applying to the envelope maximum extension in the elastic range of the envelope; and
(iii) measuring the size of a multitude of pores that are visible on a 5.8x5.8 mm sized microscopy image with 48 fold magnification; and optionally,
wherein the envelope is 10-500% elastic as measured according to DIN EN 14704-1.

5. The method according to any one of claims 1 to 4,
wherein the envelope contains knitted fabrics or woven fabrics or non-woven fabrics, in particular knitted fabrics or woven fabrics, most preferred knitted fabrics.

6. The method according to any one of claims 1 to 5, wherein the envelope contains knitted or woven-fabrics, preferably knitted fabrics, consisting of yarns having a linear mass density of 5-165 DTEX, preferably 10-120 DTEX, more preferably 15-100 DTEX.

7. The method according to any one of claims 1 to 6,
wherein the envelope contains materials selected from the group consisting of natural polymeric materials, synthetic polymeric materials, and mixtures thereof, wherein natural polymeric materials are preferably selected from the group consisting of cellulose, cotton, wool, silk, cashmere and mixtures thereof, and
wherein synthetic polymeric materials are preferably selected from the group consisting of cellulose-derivatives (such as cellulose acetate and nitrocellulose), polyamides, elastomers, polyurethanes, polyolefins such as polypropylenes, polyesters (such as polyethylene terephthalate), polyethylene glycols, acrylics, and mixtures thereof.

8. The method according to claim 7 wherein the envelope consists of a mixed fabric of (i) modal and elastane or (ii) micromodal and elastane.

9. A vegan food product, particularly a smear-ripened cheese analogue, having a residual surface layer with a mean thickness of between 0.05 mm to 0.2 mm, as measured by microscopy, obtained by the method according to any one of claims 1 - 8.

10. A **vegan food product** containing water, preferably in an amount of 25 - 75% (w/w) and at least one of the following components:
• a plant, algae, bacteria or fungus derived polysaccharide component, preferably in an amount of 5 - 75% (w/w);
• a plant, algae, bacteria or fungus derived protein component, preferably in an amount of 5 - 75% (w/w);
and optionally in addition a plant, algae, bacteria or fungus derived fat component, preferably in an amount of 5 - 50% (w/w)
**characterized in that** the vegan food product is
• smear-ripened; and
• solid or semi-solid at 20°C.

11. The vegan food product according to claim 10,
which complies with one or more of the following criteria:
• the plant, algae, bacteria or fungus derived polysaccharide component is a root starch, a tuber starch, a grain starch, an algae starch or a mixture thereof, preferably selected from the group consisting of tapioca starch, potato starch, corn starch, agar, alginate and mixtures thereof;
• the plant, algae, bacteria or fungus derived fat component is selected from the group consisting of avocado oil, canola oil, cocoa butter, coconut oil, corn oil, palm oil, safflower oil, sesame oil, sunflower oil, rapeseed oil, algae oil, a cashew nut derived fat component, an almond derived fat component, a soybean derived fat component, a lupine derived fat component, a pea-derived fat component, a yeast derived fat component and mixtures thereof;
• the plant, algae, bacteria or fungus derived protein component is selected from the group consisting of a cashew nut derived protein component, an almond derived protein component, a soybean derived protein component, a lupine derived protein component, a pea derived protein component, a corn derived protein component, a potato derived protein component, a wheat derived protein component, an algae derived protein component, a pseudocereal derived protein component, a yeast derived protein component and mixtures thereof.

12. The vegan food product according to any one of claims 10 - 11, which is a smear-ripened cheese analogue.

13. The vegan food product according to any one of claims 10 - 12, which has a residual smear layer with a mean thickness of between 0.05 mm to 0.2 mm, as measured by microscopy.

14. **Use of a sheet-like porous material** in the manufacturing of a surface-ripened vegan food product,
wherein the sheet-like material contains pores having a mean size in the range of 0.01 mm - 2.00 mm, wherein the mean size relates to
a) in case of a circular pore, the pore size relates to the diameter of the pore; or in case of an oval or polygonal shape of the pore, the pore size relates to the distance between the most distant points or corners of the pore; and optionally,
wherein the envelope is 10 - 500% elastic as measured according to DIN EN 14704-1; and
wherein the vegan food product contains water and at least one of the following components:
• a plant, algae, bacteria or fungus derived polysaccharide component, preferably in an amount of 5 - 75% (w/w);
• a plant, algae, bacteria or fungus derived protein component, preferably in an amount of 5 - 75% (w/w);
and optionally in addition a plant, algae, bacteria or fungus derived fat component, preferably in an amount of 5 - 50% (w/w).

15. The use according to claim 14, wherein the vegan food product is as defined in any one of claims 10 - 13; and / or the sheet-like material is an envelope as defined in any one of claims 1, 4, 5, 6, 7 or 8.
